(19) Europäisches Patentamt
European Patent Office
Office européen des brevets

(11) Veröffentlichungsnummer: **0 318 792**
**A2**

# (12) EUROPÄISCHE PATENTANMELDUNG

(21) Anmeldenummer: **88119374.2**

(51) Int. Cl.⁴: **H01B 3/44 , C08L 51/00**

(22) Anmeldetag: **22.11.88**

(30) Priorität: **24.11.87 DE 3739738**

(43) Veröffentlichungstag der Anmeldung:
**07.06.89 Patentblatt 89/23**

(84) Benannte Vertragsstaaten:
**AT BE CH DE ES FR GB GR IT LI LU NL SE**

(71) Anmelder: **Licentia Patent-Verwaltungs-GmbH**
**Theodor-Stern-Kai 1**
**D-6000 Frankfurt/Main 70(DE)**

(72) Erfinder: **Wartusch, Johann**
**Am Kaiserberg 13**
**D-3502 Vellmar(DE)**
Erfinder: **Saure, Manfred, Dr.**
**Weissensteinstrasse 47**
**D-3500 Kassel(DE)**

(74) Vertreter: **Langer, Karl-Heinz, Dipl.-Ing. et al**
**Licentia Patent-Verwaltungs-GmbH**
**Theodor-Stern-Kai 1**
**D-6000 Frankfurt/Main 70(DE)**

## (54) Kunststoffisolierung zur Stabilisierung gegen spannungsinduzierte Defekte.

(57) Bei einer Kunststoffisolierung, welche zur Stabilisierung gegen spannungsinduzierte Defekte an das Basispolymer der Kunststoffisolierung gebundene Molekülgruppen aufweist, ist vorgesehen, daß dem Basispolymer eine Substanz zugefügt ist, deren Moleküle mehrere funktionelle Gruppen aufweisen, von denen mindestens eine Gruppe der Bindung an das Polymermolekül dient, während eine andere die Vernetzung bewirkt und dabei eine weitere -stabilisierend wirkende - Gruppe aktiviert.

EP 0 318 792 A2

## Kunststoffisolierung zur Stabilisierung gegen spannungsinduzierte Defekte

Die Erfindung betrifft eine Kunststoffisolierung, welche zur Stabilisierung gegen spannungsinduzierte Defekte an das Basispolymer der Kunststoffisolierung gebundene Molekülgruppen aufweist.

Kunststoffisolierungen können Polymere auf der Basis von Kohlenwasserstoffen sein, die als elektrische Isolierung in Hochspannungsanlagen, insbesondere für Muffen und Kabel verwendet werden.

Elektrisch beanspruchte Isolierungen zeigen nach einiger Zeit spannungsinduzierte Defekte, die als "electrochemical trees" (ECT) und bei zusätzlichem Wassereinfluß als "water trees" (WT) bezeichnet werden. Die Betriebssicherheit von Hochspannungsanlagen und -kabeln wird durch diese Phänomene beeinträchtigt, und so hat es nicht an Versuchen gefehlt, die Ausbreitung von water trees zu behindern, so daß es nicht zum elektrischen Durchschlag kommen kann.

Um die Wachstumsrate von "water trees" zu behindern, sind verschiedene Stabilisatoren als Additive für Kunststoffisolierungen vorgeschlagen worden. Um wirksam zu sein, muß ein solcher Zusatz verschiedenen Bedingungen genügen: er muß die elektrischen Eigenschaften der Isolierung auf lange Zeit sichern; er muß chemisch und physikalisch mit dem Polymermaterial verträglich sein; außerdem darf er die Verarbeitbarkeit der Isolierung nicht herabsetzen und sollte die Standard-Eigenschaften der Isolierung nicht beeinträchtigen.

Die Stabilisierung von VPE gegen spannungsinduzierte Defekte ist u.a. bereits in dem Konferenzbericht der IEEE Power Engineering Society, Winter Meeting, New York, Feb. 4-9, 1979, beschrieben. Dort wird als watertree-retardierender Zusatz auf die Hauptkette des Polyäthylen-Moleküls ein Oligomer aufgepfropft. Von Nachteil ist dabei, daß zum Vernetzen des Basis-Polymers eine zusätzliche Verbindung benötigt wird.

Aus der DE-OS 29 35 224 ist es bekannt, Silanverbindungen auf die Makromoleküle des Basismaterials aufzupropfen. Mit diesen Silanen läßt sich jedoch die Stabilisierung gegen "water trees" und die Vernetzungswirkung nicht gleichzeitig bewirken.

Der Erfindung leigt die Aufgabe zugrunde, eine Kunststoffisolierung anzugeben, welche eine verbesserte Resistenz gegen "water trees" aufweist und der sich ein Vernetzer leicht zumischen läßt. Diese Aufgabe wird bei einer Kunststoffisolierung der eingangs erwähnten Art nach der Erfindung dadurch gelöst, daß dem Basispolymer eine Substanz zugefügt ist, deren Moleküle mehrere funktionelle Gruppen aufweisen, von denen mindestens eine Gruppe der Bindung an das Polymermolekül dient, während eine andere die Vernetzung bewirkt und dabei eine weitere - stabilisierend wirkende - Gruppe aktiviert. Vorteilhafte Weiterbildungen der Erfindung sind in den Unteransprüchen gekennzeichnet.

Die erfindungsgemäße Verbindung hat den Vorteil, daß sie nicht aus dem Polymer heraus diffundieren kann, da die Moleküle auf das Polymer gepfropft sind, wobei sie sowohl der Vernetzung des Polymers als auch seiner Stabilisierung gegen water trees dienen. Die Molekülgruppen sind trotz der Bindung des Moleküls auf die Polymerkette beweglich genug, um die Vernetzungsreaktion zu bewirken. Nach der Vernetzung wird die watertree-wirksame Gruppe aktiviert.

Die Erfindung wird anhand des folgenden Ausführungsbeispiels näher erläutert. Die Substanz mit den multifunktionellen Molekülgruppen hat beispielsweise folgende Struktur:

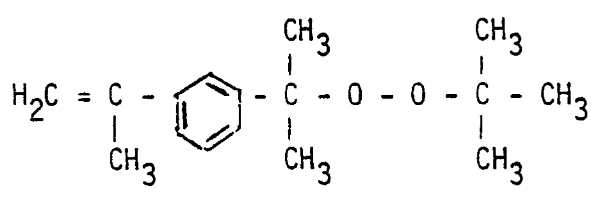

Dieses Molekül wird mit der Vinylgruppe auf das Polymermolekül aufgepfropft. Die Peroxigruppe dient als Vernetzer, wobei ein Sauerstoffatom als Alkohol- bzw. Ketogruppe am Molekül gebunden bleibt. Die OH-Gruppe ist für die wt-Stablisierung vorgesehen. Das freiwerdende Tertiär-Butanol ist in jedem Falle flüchtig, d.h. es diffundiert aus dem Kunststoff heraus. Das restliche Molekül bleibt an dem Polymer durch die Pfropfung fest gebunden. Dies konnte dadurch nachgewiesen werden, daß aromatische Produkte nicht durch Extraktion entfernt werden konnten, andererseits die chemische Bindung an das Polymer durch IR-Analyse als erwiesen gilt.

An einer Probe von vernetztem Polyethylen (VPE) wurde die watertree-Resistenz über den sogenannten Nadel-Test mit 1,5 mm Schlagweite überprüft. Dabei ergab sich bei einem Peroxidgehalt von 4 Gew. % ein Mittelwert der Wachstumslänge von 120 µm der water trees. Nach einer Temperung von 15 Stunden bei

80° C betrug die Länge der water trees 145 µm im Mittel. Zum Vergleich wurden die wt-Wachstumswerte für normales, mit Dicumylperoxid vernetztes PE gemessen. Der Mittelwert betrug ungetempert 100 µm und getempert 290 µm.

Während also bei Dicumylperoxid-vernetztem LDPE durch Verlust der (temporär) stabilisierenden Peroxidspaltprodukte eine deutliche Verschlechterung des wt-Verhaltens eintritt, ist dies bei Vernetzung mit einem an das Polymer gebundenen Stabilisator in viel geringerem Maße der Fall.

## Ansprüche

1. Kunststoffisolierung, welche zur Stabilisierung gegen spannungsinduzierte Defekte an das Basispolymer der Kunststoffisolierung gebundene Molekülgruppen aufweist,
**dadurch gekennzeichnet**, daß dem Basispolymer eine Substanz zugefügt ist, deren Moleküle mehrere funktionelle Gruppen aufweisen, von denen mindestens eine Gruppe der Bindung an das Polymermolekül dient, während eine andere die Vernetzung bewirkt und dabei eine weitere - stabilisierend wirkende - Gruppe aktiviert.

2. Kunststoffisolierung nach Anspruch 1,
dadurch gekennzeichnet, daß die Bindung durch eine Propfreaktion über eine ethylenisch ungesättigte Kohlenwasserstoffgruppe hergestellt ist.

3. Kunststoffisolierung nach Anspruch 1,
dadurch gekennzeichnet, daß die als Vernetzer wirkende Molekülgruppe eine Alkylperoxigruppe aufweist.

4. Kunststoffisolierung nach einem der Ansprüche 1 bis 3,
dadurch gekennzeichnet, daß durch die Bindung der stabilisierend wirkenden Molekülgruppe an das Polymer des Isoliermaterials das Polymer einen polaren Charakter aufweist.

5. Kunststoffisolierung nach einem der Ansprüche 1 bis 4,
dadurch gekennzeichnet, daß der polare Charakter auf Hydroxylgruppen beruht.

6. Kunststoffisolierung nach einem der Ansprüche 1 bis 5,
dadurch gekennzeichnet, daß der polare Charakter auf Ketogruppen beruht.

7. Kunststoffisolierung nach einem der Ansprüche 1 bis 6,
dadurch gekennzeichnet, daß zur Vernetzung und Stabilisierung (1-(2-tertiärbutylperoxi-isopropyl)-3-isopropenylbenzol verwendet ist.

8. Kunststoffisolierung nach einem der Ansprüche 1 bis 7,
dadurch gekennzeichnet, daß als Basispolymer Olefinhomopolymerisate Verwendung finden.

9. Kunststoffisolierung nach einem der Ansprüche 1 bis 7,
dadurch gekennzeichnet, daß als Basispolymer Copolymerisate des Ethylens mit einem weiteren polymerisationsfähigen Monomeren Verwendung finden.

10. Kunststoffisolierung nach einem der Ansprüche 1 bis 8,
dadurch gekennzeichnet, daß als Basispolymer Elastomere auf Kohlenwasserstoffbasis Verwendung finden.